# EUROPÄISCHE PATENTSCHRIFT

(11) **EP 1 159 160 B1**
(45) Veröffentlichungstag und Bekanntmachung des Hinweises auf die Patenterteilung: **26.11.2003**
(21) Anmeldenummer: 00907661.3
(22) Anmeldetag: 02.03.2000
(51) Int. Cl.: B60R 21/00

(54) **RÜCKHALTEVORRICHTUNG MIT DYNAMISCHER " KEEP-OUT-ZONE"**
RESTRAINT DEVICE WITH DYNAMIC KEEP-OUT-ZONE
DISPOSITIF DE RETENUE DOTE D'UNE ZONE D'ACCES INTERDIT DYNAMIQUE

(30) Priorität: 10.03.1999 DE 19910592
(43) Veröffentlichungstag der Anmeldung: 05.12.2001
(73) Patentinhaber: Volkswagen Aktiengesellschaft, 38436 Wolfsburg (DE)
(72) Erfinder: KATH, Christoph, D-38114 Braunschweig (DE)
(86) Internationale Anmeldenummer: EP0001817
(87) Internationale Veröffentlichungsnummer: WO00053458

(56) Entgegenhaltungen:
- R.L. PHEN, M.W. DOWDY, D.H. EBBELER, E-H. KIM, N.R. MOORE, T.R. VANZANDT: "Advanced Air Bag Technology Assessment - Final Report" JET PROPULSION LABORATORY, [Online] April 1998 (1998-04), XP002137509 Pasadena, California Retrieved from the Internet: <URL:http://csmt.jpl.nasa.gov/airbag/index .html> [retrieved on 2000-05-12]

## Beschreibung

Die Erfindung betrifft eine Rückhaltevorrichtung, die einen Airbag, eine den Zündzeitpunkt und/oder die Füllmenge des Airbags steuernde Steuereinrichtung, sowie eine·Kontrolleinrichtung, der von mindestens einem Sensorelement erzeugte, die Position eines Fahrzeuginsassen charakterisierende Sensorsignale zuführbar sind, und durch die ein das Auslösen des Airbags unterdrückendes Kontrollsignal erzeugbar ist, wenn von der Kontrolleinrichtung aufgrund der ihr zugeführten Sensorsignale eine kritische Position des Fahrzeuginsassens in einer Keep-out-Zone des Airbags festgestellt wird, aufweist.

Eine derartige Rückhaltevorrichtung ist aus dem Abschlußbericht des Jet Propulsion Laboratory, Pasadena, "Advanced Air Bag Technology Assessment", April 1998 (XP 002137509) bekannt. Hierbei ist vorgesehen, daß die Kontrolleinrichtung die die Sitzposition des Fahrzeuginsassen charakterisierenden Sensorsignale dahingehend auswertet, ob sich der Fahrzeuginsasse in einer vorher definierten ersten oder zweiten Keep-out-Zone, welche im wesentlichen durch den Schwenkbereich einer den Airbag im Normalfall abdeckenden Airbag-Klappe sowie einem weiteren, darüber hinausgehenden Bereich, welcher im wesentlichen durch die Entfaltungscharakteristik des Airbags festgelegt wird, befindet. In diesem Fall geht die Kontrolleinrichtung der bekannten Rückhaltevorrichtung davon aus, daß bei einem zu diesem Zeitpunkt erfolgenden Auslösen des Airbags der Insasse in hohem Maße gefährdet würde, und erzeugt deshalb das die Auslösung des Airbags inhibierende Kontrolisignal. Diese Vorgangsweise besitzt den Nachteil, daß sich die Kontrolleinrichtung statisch an vordefinierten Werten für die Keep-out-Zone orientiert und daher nicht flexibel genug auf den tatsächlichen Unfallhergang reagiert.

Es ist daher Aufgabe der Erfindung, eine Rückhaltevorrichtung der eingangs genannten Art derart weiterzubilden, daß eine bessere Anpassung des die Auslösung des Airbags unterdrückenden Kontrollsignals der Kontrolleinrichtung an das tatsächliche Unfallgeschehen erzielbar ist.

Diese Aufgabe wird erfindungsgemäß dadurch gelöst, daß durch die Kontrolleinrichtung der Rückhaltevorrichtung die Keep-out-Zone in Abhängigkeit von ihr zugeführten, fahrzeugexterne und/oder fahrzeuginterne Parameter repräsentierenden Sensorsignalen dynamisch in ihrer Größe nen festgelegt wird.

Die erfindungsgemäßen Maßnahmen besitzen den Vorteil, daß dadurch eine bessere Anpassung des Auslöseverhaltens des Airbags an den tatsächlichen Unfallhergang erzielt ist: Bei geringer Unfallschwere - als Beispiel für einen fahrzeugexternen Parameter - ist vorteilhafterweise vorgesehen, daß die Kontrolleinrichtung ihrer Entscheidung, ob sie das das Auslösen des Airbags inhibierende Kontrollsignal erzeugt oder nicht, eine größere Keep-out-Zone zugrundelegt, wohingegen bei einer hohen Unfallschwere eine im Vergleich zur vordefinierten, statischen Keep-out-Zone wesentlich kleinere dynamische Keep-out-Zone dieser Entscheidung zugrundegelegt wird, d. h., daß bei der erfindungsgemäßen Rückhaltevorrichtung im letztgenannten Fall der Airbag auch dann ausgelöst wird, wenn sich der Insasse des Fahrzeuges in einer Out-of-Position-Haltung oder sogar in einer Critical-Out-of-Position-Haltung befindet.

Eine vorteilhafte Weiterbildung der Erfindung sieht vor, daß das Gewicht des Insassen also eines fahrzeuginternen Parameters - sensiert und ein entsprechendes Sensorsignal der Kontrolleinrichtung der erfindungsgemäßen Rückhaltevorrichtung zugeführt wird und in die Berechnung der dynamischen Keep-out-Zone mit einbezogen wird.

Eine weitere vorteilhafte Weiterbildung der Erfindung sieht vor, daß die Fahrzeuggeschwindigkeit und/oder die Fahrzeugbeschleunigung in die Berechnung der dynamischen Keep-out-Zone einbezogen wird. Außerdem kann in vorteilhafter Weise gemäß weiteren vorteilhaften Weiterbildungen der Erfindung vorgesehen sein, daß auch die Bewegungsrichtung und/oder der Aufprallort des Fahrzeuginsassens auf den Airbag in die Bestimmung der dynamischen Keep-out-Zone einbezogen wird.

Weitere vorteilhafte Weiterbildungen sind Gegenstand der Unteransprüche.

Weitere Einzelheiten und Vorteile der Erfindung sind dem Ausführungsbeispiel zu entnehmen, das im folgenden anhand der einzigen Figur beschrieben wird. Es zeigt:

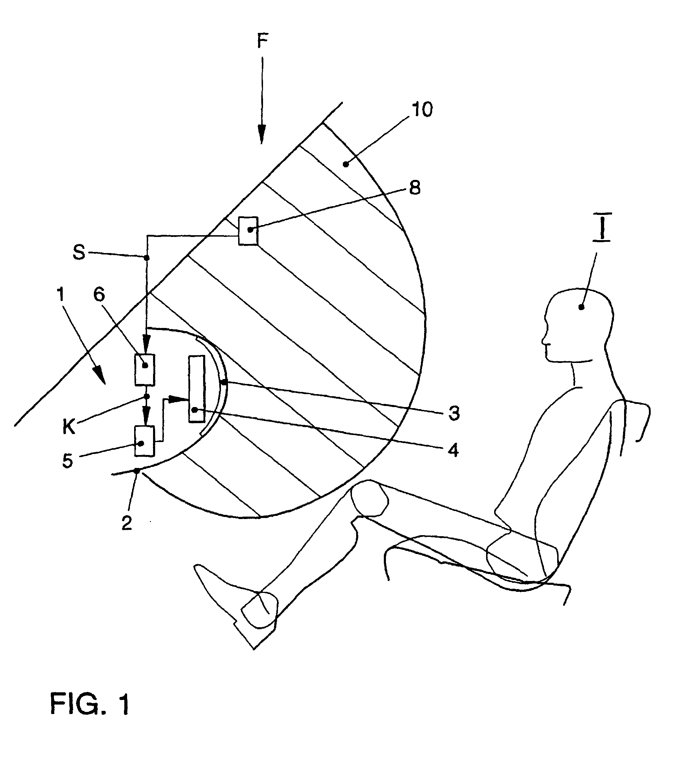

- Figur 1: eine schematische Darstellung eines Ausführungsbeispiels.

In Figur 1 ist nun eine allgemein mit 1 bezeichnete Rückhaltevorrichtung dargestellt, welche in einem Armaturenbrett 2 eines Fahrzeugs F, insbesondere eines Kraftfahrzeuges, angeordnet ist. Die Rückhaltevorrichtung 1 weist einen im Normalfall von einer Airbag-Klappe 3 verdeckten Airbag 4 auf, wobei der Zündzeitpunkt und/oder die Füllmenge des Airbags 4 von einer Steuereinrichtung 5 gesteuert wird. Desweiteren ist eine Kontrolleinrichtung 6 vorgesehen, der ein Sensorsignal S eines die Position eines Fahrzeuginsassen 1 erfassenden Sensors 8 zugeführt wird. Hierbei erzeugt die Kontrolleinrichtung 6 ein das Auslösen des Airbags 4 verhinderndes Kontrollsignal K, welches der Steuereinrichtung 5 zugeführt wird, wenn sich der Fahrzeuginsasse I innerhalb einer Keep-out-Zone 10, also in der Regel in einer Out-of-Position- oder einer Critical-Out-of-Position-Haltung befindet. Ein derartiges Rückhaltesystem 1 ist an und für sich bekannt und muß daher nicht mehr näher beschrieben werden. Es ist jedoch festzuhalten, daß bei den bekannten Rückhaltevorrichtungen die Keep-out-Zone 10, also derjenige Bereich, in dem in der Regel für einen sich in dieser Zone befindlichen Insassen 1 die Verletzungsgefahr durch den sich entfaltenden Airbag 4 und/oder die Airbag-Klappe 3 die vom Airbag 4 tatsächlich zu erzielende Schutzwirkung übersteigt, statisch festgelegt in der Kontrolleinrichtung 6 abgespeichert ist.

Im Gegensatz hierzu sieht die beschriebene Rückhaltevorrichtung 1 in vorteilhafter Art und Weise vor, daß die Keep-out-Zone 10 in Abhängigkeit vom tatsächlichen Unfallgeschehen dynamisch von der Kontrolleinrichtung 6 festgelegt wird. Unter dem Begriff Unfallgeschehen ist hier die Gesamtheit der relevanten, fahrzeuginternen und/oder fahrzeugexternen Parameter zu verstehen, die von Sensorelementen des Fahrzeuges F sensiert und der Kontrolleinrichtung 6 zugeführt werden.

Hierzu ist vorgesehen, daß der Kontrolleinrichtung 6 z. B. eines oder mehrerer der nachstehend beschriebenen Signale entsprechender, an und für sich bekannter und daher in Figur 1 nicht gezeigter Sensoreinrichtungen zugeführt wird oder werden. Diese zusätzlichen Sensoreinrichtungen sind üblicherweise in heutigen Fahrzeugen bereits enthalten, um die Steuereinrichtung 5 mit entsprechenden Eingangssignalen zu versorgen, um den Zündzeitpunkt und/oder die Füllmenge des Airbags 4 in einer dem Unfallverlauf angepaßten Art und Weise zu steuern. Wir weisen beispielsweise hierzu auf die WO 97/21566, in der ein Airbagsystem mit variablem Auslösezeitpunkt beschrieben ist.

Die der Kontrolleinrichtung 6 zugeführten Sensorsignale sind nun - beispielhafterweise und nicht abschließend - folgende Parameter:

### a) fahrzeugexterne Parameter

Bei einem Unfallgeschehen mit nur geringer Unfallschwere wird von der Kontrolleinrichtung 6 die dynamische Keep-out-Zone 10 gegenüber der statischen Keep-Out-Zone erweitert, d. h. die derart generierte dynamische Keep-out-Zone 10 erstreckt sich weiter vom Armaturenbrett 2 und der Airbag-Klappe 3 weg, wodurch bewirkt wird, daß die Kontrolleinrichtung 6 ein die Auslösung des Airbags 4 verhinderndes Kontrollsignal K auch noch dann erzeugt, wenn sich der Fahrzeuginsasse innerhalb der statischen Keep-out-Zone befindet. Hierdurch wird erreicht, daß bei einem leichten Unfall ein in diesem Fall nicht erforderliches Auslösen des Airbags 4 verhindert wird, wodurch eine Senkung der Reparaturkosten erreicht wird.

Im Gegensatz dazu verkleinert die Kontrolleinrichtung 6 bei einem Unfallgeschehen mit einer hohen Unfallschwere die dynamische Keep-out-Zone 10 gegenüber der statischen Keep-out-Zone, so daß ein Auslösen des Airbags 4 auch noch in dem Fall erfolgt, daß sich der Fahrzeuginsasse 1 innerhalb der statischen Keep-out-Zone, also in der Regel in einer Out-of-Position- oder einer Critical-Out-of-Position-Haltung befindet. Im Extremfall kann bei einer besonders hohen Unfallschwere vorgesehen sein, daß der Airbag 4 noch ausgelöst wird, wenn sich der Fahrzeuginsasse 1 bereits im Schwenkbereich der Airbag-Klappe 3 befindet. Hinter diesem Kontrollverfahren für den Airbag 4 steht die Überlegung, daß bei sehr schweren Unfällen ein Zusammenstoß mit der Airbag-Klappe 3 im Vergleich zu einem vom Airbag 2 nicht abgefederten Aufprall des Insassen 1 auf das Armaturenbrett 2 das kleinere Übel darstellt.

### b) fahrzeuginterne Parameter

In entsprechender Art und Weise kann ebenfalls vorgesehen sein, daß anstatt der fahrzeugexternen Unfallparameter - z. B. der Unfallschwere - oder zusätzlich hierzu fahrzeuginterne Parameter, z. B. die Fahrzeuggeschwindigkeit und/oder die Größe der negativen Beschleunigung des Fahrzeugs und/oder die Richtung oder der Aufprallort des Fahrzeuginsassens und/oder der Gurt-Status, in die Bestimmung der dynamischen Keep-out-Zone eingehen.

Ebenfalls ist es möglich und in einer Vielzahl von Fällen wünschenswert, daß auch das Insassengewicht erfaßt und der Kontrolleinrichtung 6 ein diesen fahrzeuginternen Parameter charakterisierendes Sensorsignal zugeführt wird. Weitere fahrzeuginterne Parameter, die sensiert und die entsprechenden Sensorsignale der Kontrollvorrichtung 6 zugeführt werden, sind die Sitzbelegungsklassifizierungen, also zum Beispiel, ob auf dem Fahrzeugsitz eine Person platzgenommen hat oder ein Kindersitz angeordnet ist, und/oder die Position des Fahrzeugsitzes, insbesondere hinsichtlich seiner Längseinstellung, seiner Lehnenneigung und seiner Sitzhöhe.

Dem Fachmann ist klar ersichtlich, daß die obige Aufzählung der in die Bestimmung der dynamischen Keep-out-Zone eingehenden Parameter lediglich einen exemplarischen Charakter besitzt und die Allgemeinheit der dahinterstehenden Überlegung, die Kontrolleinrichtung 6 in die Lage zu versetzen, anhand von vorprogrammierten Kriterien zu entscheiden, ob bei einem sensierten Unfallgeschehen und einer ebenfalls erfaßten Position des Fahrzeuginsassens 1 die Verletzungsgefahr, welche sich durch eine zu diesem Zeitpunkt entfaltenden Airbag 4 oder die ausschwenkende Airbag-Klappe 3 resultiert, im Verhältnis zu der Schutzwirkung, die sich durch den entfaltenden Airbag 4 aufbauen läßt, das entsprechende Verletzungsrisiko des Fahrzeuginsassens überwiegt oder nicht.

## Patentansprüche

1. Rückhaltevorrichtung, die einen Airbag (4), eine den Zündzeitpunkt und/oder die Füllmenge des Airbags (4) steuernde Steuereinrichtung (5) sowie eine Kontrolleinrichtung (6), der von mindestens einem Sensorelement erzeugte, die Position eines Fahrzeuginsassen (I) charakterisierende Sensorsignale zuführbar sind, und durch die ein das Auslösen des Airbags (4) unterdrückendes Kontrollsignal (K) erzeugbar ist, wenn von der Kontrolleinrichtung (6) aufgrund der ihr zugeführten Sensorsignale eine kritische Position des Fahrzeuginsassen (I) in einer Keep-out-Zone des Airbags (4) festgestellt wird, umfaßt
**dadurch gekennzeichnet, daß**
durch die Kontrolleinrichtung (6) die Keep-out-Zone (10) in Abhängigkeit ihr (6) zugeführter, fahrzeugexterne und/oder fahrzeuginterne Parameter charakterisierenden Sensorsignalen dynamisch in ihrer Größe nen festgelegt wird.

2. Rückhaltevorrichtung nach Anspruch 1,
**dadurch gekennzeichnet, daß**
der Kontrolleinrichtung (6) mindestens ein die Unfallschwere charakterisierendes Sensorsignal zugeführt wird, und daß die Kontrolleinrichtung (6) bei einem eine hohe Unfallschwere charakterisierenden Sensorsignal die dynamische Keep-out-Zone (10) gegenüber der statischen Keep-out-Zone verkleinert, und bei einem eine geringe Unfallschwere charakterisierenden Sensorsignal die dynamische Keep-out-Zone (10) gegenüber der statischen Keep-out-Zone vergrößert wird.

3. Rückhaltevorrichtung nach Anspruch 1 oder 2,
**dadurch gekennzeichnet, daß**
der Kontrolleinrichtung (6) mindestens ein die Geschwindigkeit des Fahrzeugs (F) charakterisierendes Sensorsignal zugeführt wird.

4. Rückhaltevorrichtung nach einem der vorangehenden Ansprüche,
**dadurch gekennzeichnet, daß**
der Kontrolleinrichtung (6) mindestens ein die negative Beschleunigung des Fahrzeuges (F) charakterisierendes Sensorsignal zugeführt wird.

5. Rückhaltevorrichtung nach einem der vorangehenden Ansprüche,
**dadurch gekennzeichnet, daß**
der Kontrolleinrichtung (6) mindestens ein die Bewegungsrichtung des Fahrzeuginsassen (I) charakterisierendes Sensorsignal zugeführt wird.

6. Rückhaltevorrichtung nach einem der vorangehenden Ansprüche,
**dadurch gekennzeichnet, daß**
der Kontrolleinrichtung (6) mindestens ein den Aufprallort des Fahrzeuginsassen (I) charakterisierendes Sensorsignal zugeführt wird.

7. Rückhaltevorrichtung nach einem der vorangehenden Ansprüche,
**dadurch gekennzeichnet, daß**
der Kontrolleinrichtung (6) mindestens ein den Gurtstatus des Fahrzeugs (F) charakterisierendes Sensorsignal zugeführt wird.

8. Rückhaltevorrichtung nach einem der vorgenannten Ansprüche,
**dadurch gekennzeichnet, daß**
der Kontrolleinrichtung (6) mindestens ein das Gewicht eines Fahrzeuginsassen charakterisierendes Sensorsignal zugeführt wird.

9. Rückhaltevorrichtung nach einem der vorgenannten Ansprüche,
**dadurch gekennzeichnet, daß**
der Kontrolleinrichtung (6) mindestens ein eine Sitzbelegungsklassifizierung charakterisierendes Sensorsignal zugeführt wird.

10. Rückhaltevorrichtung nach einem der vorgenannten Ansprüche,
**dadurch gekennzeichnet, daß**
der Kontrolleinrichtung (6) mindestens ein die Position eines der Rückhaltevorrichtung zugeordneten Sitzes, insbesondere die Längseinstellung, Lehnenneigung sowie die Sitzhöhe des Sitzes, chrakterisierendes Sensorsignal zugeführt wird.

## Claims

1. Restraint device which comprises an airbag (4), a control device (5) which controls the ignition point and/or the filling amount of the airbag (4) and a controller (6) to which sensor signals which are generated by at least one sensor element and characterize the position of a vehicle occupant (I) can be fed, and by means of which a controlling signal (K) which suppresses the triggering of the airbag (4) can be generated if a critical position of the vehicle occupant (I) in a Keep-out zone of the airbag (4) is detected on the basis of the sensor signals fed to it, **characterized in that** the controller (6) dynamically newly determines the magnitude of the Keep-out zone (10) as a function of sensor signals which are fed to it (6) and characterize vehicle-external and/or vehicle-internal parameters.

2. Restraint device according to Claim 1, **characterized in that** at least one sensor signal which characterizes the severity of an accident is fed to the controller (6), and **in that**, when there is a sensor signal which characterizes a high level of severity of an accident, the controller (6) decreases the dynamic Keep-out zone (10) with respect to the static Keep-out zone, and when there is a sensor signal which characterizes a low level of severity of an accident, the dynamic Keep-out zone (10) is increased with respect to the static Keep-out zone.

3. Restraint device according to Claim 1 or 2, **characterized in that** at least one sensor signal which characterizes the speed of the vehicle (F) is fed to the controller (6).

4. Restraint device according to one of the preceding claims, **characterized in that** at least one sensor signal which characterizes the negative acceleration of the vehicle (F) is fed to the controller (6).

5. Restraint device according to one of the preceding claims, **characterized in that** at least one sensor signal which characterizes the direction of movement of the vehicle occupant (I) is fed to the controller (6).

6. Restraint device according to one of the preceding claims, **characterized in that** at least one sensor signal which characterizes the location of the impact of the vehicle occupant (I) is fed to the controller (6).

7. Restraint device according to one of the preceding claims, **characterized in that** at least one sensor signal which characterizes the seat belt status of the vehicle (F) is fed to the controller (6).

8. Restraint device according to one of the preceding claims, **characterized in that** at least one sensor signal which characterizes the weight of a vehicle occupant is fed to the controller (6).

9. Restraint device according to one of the preceding claims, **characterized in that** at least one sensor signal which characterizes a seat occupation classification is fed to the controller (6).

10. Restraint device according to one of the preceding claims, **characterized in that** at least one sensor signal which characterizes the position of a seat which is assigned to the restraint device, in particular the longitudinal setting, inclination of the backrest and the height of the seat, is fed to the controller (6).

## Revendications

1. Dispositif de retenue, qui comprend un airbag (4), un appareil de commande (5) commandant le moment d'allumage et/ou la quantité de remplissage de l'airbag (4) et un appareil de contrôle (6), auquel peuvent être amenés des signaux de capteur générés par au moins un élément capteur et caractérisant la position d'un passager de véhicule (I), et par lequel on peut générer un signal de contrôle (K) supprimant le déclenchement de l'airbag (4) si l'appareil de contrôle (6) constate sur la base des signaux de capteur qui lui sont amenés une position critique du passager du véhicule (I) dans une zone d'accès interdit de l'airbag (4),
**caractérisé en ce que**
l'appareil de contrôle (6) redéfinit de façon dynamique dans sa grandeur la zone d'accès interdit (10) en fonction des signaux de capteur qui lui (6) sont amenés et caractérisant des paramètres externes et/ou internes au véhicule.

2. Dispositif de retenue selon la revendication 1,
**caractérisé en ce que**
au moins un signal de capteur caractérisant la gravité de l'accident est amené à l'appareil de contrôle (6) et **en ce que** l'appareil de contrôle (6) réduit la zone dynamique d'accès interdit (10) par rapport à la zone statique d'accès interdit avec un signal de capteur caractérisant une gravité d'accident élevée, et la zone dynamique d'accès interdit (10) est agrandie par rapport à la zone statique d'accès interdit avec un signal de capteur caractérisant une faible gravité d'accident.

3. Dispositif de retenue selon la revendication 1 ou 2
**caractérisé en ce que**
au moins un signal de capteur caractérisant la vitesse du véhicule (F) est amené à l'appareil de contrôle (6).

4. Dispositif de retenue selon l'une quelconque des revendications précédentes,
**caractérisé en ce que**
au moins un signal de capteur caractérisant l'accélération négative du véhicule (F) est amené à l'appareil de contrôle (6).

5. Dispositif de retenue selon l'une quelconque des revendications précédentes,
**caractérisé en ce que**
au moins un signal de capteur caractérisant le sens de déplacement du passager de véhicule (I) est amené à l'appareil de contrôle (6).

6. Dispositif de retenue selon l'une quelconque des revendications précédentes,
**caractérisé en ce que**
au moins un signal de capteur caractérisant le point d'impact du passager de véhicule (I) est amené à l'appareil de contrôle (6).

7. Dispositif de retenue selon l'une quelconque des revendications précédentes,
**caractérisé en ce que**
au moins un signal de capteur caractérisant l'état de la sangle du véhicule (F) est amené à l'appareil de contrôle (6).

8. Dispositif de retenue selon l'une quelconque des revendications précédentes,
**caractérisé en ce que**
au moins un signal de capteur caractérisant le poids d'un passager de véhicule est amené à l'appareil de contrôle (6).

9. Dispositif de retenue selon l'une quelconque des revendications précédentes,
**caractérisé en ce que**
au moins un signal de capteur caractérisant une classification d'occupation de siège est amené à l'appareil de contrôle (6).

10. Dispositif de retenue selon l'une quelconque des revendications précédentes,
**caractérisé en ce que**
au moins un signal de capteur caractérisant la position d'un siège attribué au dispositif de retenue, caractérisant en particulier le réglage longitudinal, l'inclinaison du dossier et la hauteur d'assise du siège, est amené à l'appareil de contrôle (6).
